# EUROPEAN PATENT SPECIFICATION

(11) **EP 2 168 815 B1**
(45) Date of publication and mention of the grant of the patent: **04.06.2014**
(21) Application number: 08105421.5
(22) Date of filing: 24.09.2008
(51) Int. Cl.: B60R 1/00, B60W 50/14

(54) **Method and device for detecting possibly colliding objects in a blind spot area**
Verfahren und Vorrichtung zur Erfassung möglicherweise zusammenstoßender Objekte in einem toten Winkelbereich
Procédé et dispositif pour détecter les objets éventuellement collidant dans une zone d'angle mort

(43) Date of publication of application: 31.03.2010
(73) Proprietor: Robert Bosch GmbH, 70442 Stuttgart (DE)
(72) Inventor: Holze, Harald, 1024 Ecublens (CH); Gilliard, Bertrand, 1110 Morges / Schweiz (CH); Giordani, Marc, 1123 Aclens (CH)

(56) References cited:
- EP-A- 1 878 618
- EP-A- 1 974 998
- US-A1- 2003 151 563
- US-A1- 2004 061 598

## Description

### Background of the invention

The present invention is related to a method and a device for detecting possibly colliding objects in blind spot areas, and dependent on this give a warning to the driver.

From the DE 103 40 496 Al, it is known that for the purpose of increasing the active security of a vehicle, the hidden area behind the A-pillar is filmed by an outside camera, and displayed to the driver by a displaying device. By using such a visualization system, there are no more remaining areas, which the driver cannot see, without contorting his head or body.

EP 1878 618 A2 shows a method to select from different captured images from different cameras of the surrounding of the vehicle which image to display at a pillar of a vehicle according to a determined blind spot, which is calculated by the determination of the position of the head of a driver and the pillars.

In particular the method is for detecting possibly colliding objects in at least one hidden area for an operator of a vehicle, whereby the possibly colliding objects in the vicinity and a first position of the operators head or eyes are detected and at least one hidden area by a relative position between the operators head and visual obstacles is determined.

The document EP 1 974 998 A1 from the same applicant falls under Article 54(3) EPC and shows nearly the same subject additionally mentioning the view to a rear mirror and the determination of the position of the drivers eyes.

### Description of the invention

The method and device for detecting possibly colliding objects in the blind spot area, according to the invention, with the features of the independent claim, has in contrast to the prior art the advantage that not all information of hidden areas have to be displayed all the time. Instead, warning or displaying only occurs if a dangerous situation appears, such as if an object which may collide with a vehicle is located inside the hidden area. Otherwise, if there is no dangerous situation, there is no need to display the hidden area to the driver. This is comparable to traffic lights, which are basically useless if there is no traffic at all. This is of advantage since the driver is not distracted or disturbed by unnecessary information displayed, for example the landscape drifting past.

The invention takes advantage of the knowledge about the position of the drivers head or eyes. By knowing this position and additionally knowing the position of visual obstacles like pillars or mirrors of, or objects inside, a car and putting them in geometric relation, for example by using one common coordinate system, the real hidden/invisible area from the actual driver's point of view can be exactly determined. Systems of prior art only approximate the hidden area by assuming a standard position of the drivers head or eyes. In reality this may deviate, for example if the driver has a very relaxed driver's seat adjustment or leans on the opened window frame or over to the other front seat passenger's side. Thus, by knowing the real hidden areas, known collision avoiding systems and other safety functions can be used more selectively and optimized to obtain the same or even more safety, instead of bothering the driver with unnecessary information.
Further on, dangerous situations can be detected earlier and sometimes so early enough to avoid usage of emergency systems. Depending on the equipment of the vehicle, other systems might be used commonly with this invention, for example sensors for input signals, like a front area video camera or output systems, like loudspeakers or displays. The devices according to the invention must be capable to determine or at least estimate the driver's head or eyes actual position, furthermore the capability to detect possibly colliding objects within a sufficient range within the hidden area and the capability to use these information to determine dynamically the hidden area, usually a angular domain which the driver cannot see and as a second step check whether detected objects actually lay inside.

The advantage of measuring the position of possibly colliding objects relative to the coordinate system of the vehicle is that the velocity trajectories can be calculated, using measurement data from successive time intervals. Position data is usually the bearing, size and the distance of the objects. Other methods for finding out if a collision might occur, like another geometry method or the usage of a different coordinate system, may also be applied.

Usage of data from information or navigation systems may give the advantage to have further criteria for determining the danger of situations. Thus, it can be predicted which trajectory the own vehicle will likely follow, as well as crosschecking if other objects have trajectories according to the road's course. This specific information about the actual local driving environment (e.g. the course of roads, existence of adjacent roads, distance, and related information about next cross-roads or roundabouts) can be obtained from such an information- or navigation system. Furthermore information about constructions or buildings laying aside the road and which could hide relevant objects can additionally be taken into account, as additional obstacles, whereupon the method of invention can also be applied.

The advantage of using a sensor which is capable of detecting the line of vision of the driver's eyes is that it is exactly known in which direction the driver is looking, whereas the heading of the head may differ and thus it can be determined exactly which part of the vicinity the driver is aware of. Of course it has to be taken into a count that the driver will usually remember objects he has already seen, though he is not actually looking at them.

Using a system to measure the vigilance and/or attention and/or awareness of a driver, especially microsleep, enables the system to warn the driver or react even if objects are in the driver's line of vision. This feature could for example be realized using the same camera, whicht detects the position of the driver's head or eyes.

Another advantage of the method is the capability to warn the driver only in case an object on a collision course can not be seen by him. Different kinds of optical or acoustic warning signal could be used. Such a warning might for example be realised by emitting an acoustic signal on the concerned side of the vehicle, for example by a stereo source located in the dashboard or even a surround sound system which represents the direction of the danger to the driver. The frequency and/or volume (and/or the colour) of the warning visual signal may accord to the distance of the object or severity of danger.
Other ways include (but are not restricted to) head-up displays, steering wheel vibrations etc.
Additionally to the cases where the system has detected a potential danger and that the driver is probably not aware of it, the system could optionally display helpful information to the driver without issuing disturbing warnings.

It can also be useful when other vehicles are visible but the driver could be distracted or not reacting as needed and the analysis of vehicle trajectories and speeds show that a collision is likely to occur.

The information of the real hidden and/or unseen area, obtained by the method of the invention, can be passed over to other safety system or driver assistance systems as well. The information can be placed at a typical interface or bus systems for disposal to other vehicle systems, like the airbag control unit, which can be made aware of the dangerous situation and therefore for example lowers its firing threshold.
Further on the information that the driver might not be aware of another vehicle, may be passed over to the other vehicle, by i.e. blowing the horn, or via car to car communication. Thus, driver assistance or safety systems of the other car, can be prepared for the collision or perform actions to prevent the collision.

### Term explanations

Objects according to the invention may include everything from static objects, like columns, pillars trees, road boundaries, to moving objects like humans, animals, and other vehicles. Combining the velocities and trajectories of such an object with the vehicles will lead to the information if the object is a possibly colliding one.

A hidden area, also called a blind spot, is an area that the driver cannot see at a considered moment in time, due to obstacles in the line of vision. Typically such objects are for example parts of the own vehicle, especially the pillars or mirrors, or even temporary objects inside or attached to the car, i.e. a trailer.
Especially trucks have a problem with blind spots. They have more than cars and some, which the driver cannot see, even with changing his head's position.

### Description of figures

It is shown in
Figure 1a an angle view of a car with its hidden areas,
Figure 1b a top view of a vehicle with its hidden areas,
Figure 2 the dynamics of objects and hidden areas,
Figure 3 a flow chart of the inventive method,
Figure 4 a block diagram of the inventive devices,

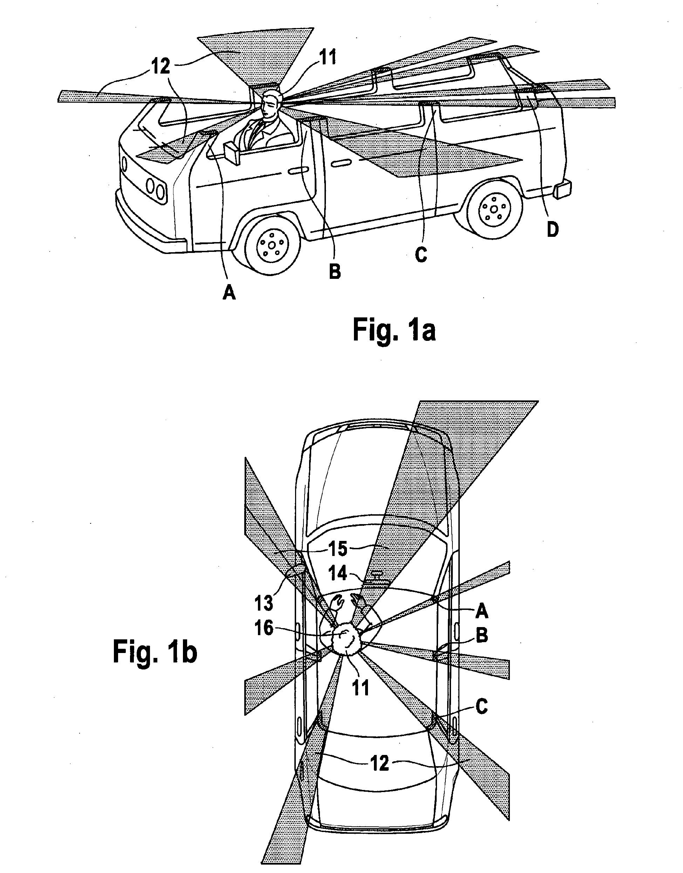

In Figure 1a and b obstacles are marked with A, B, C, D, here representing a vehicle's pillars and the side rear mirror 13 and the middle real mirror 14. It has to be taken into account that obstacles like the mirrors may interact with the line of vision only in a certain height, whereas pillars, may interfere with the line of vision all along a vertical line from the bottom to the top. Other possible obstacles, which are not drawn in the figure, may contain temporary objects like other passengers or other things carried inside a car. The origin of the line of visions is in the driver's head 11, in particular the drivers eyes 16, thus determining the hidden areas 12 or special hidden areas 15 caused by the mirrors whereas the height is important.

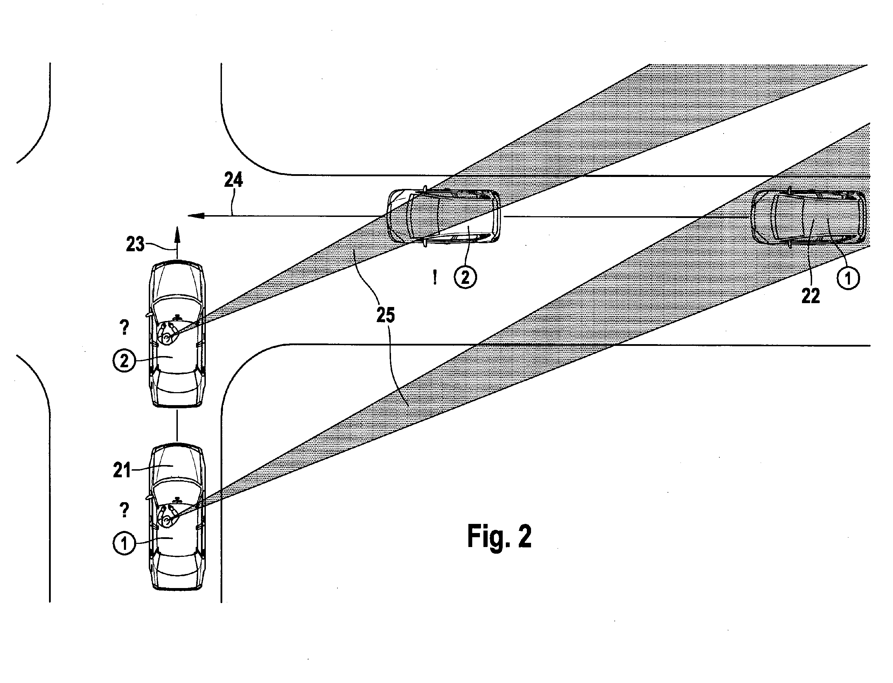

Figure 2 contains a dynamic situation where the own vehicle 21 and another object 22 are located at a first moment in a way that an object 22 is inside the hidden area 25 of the own vehicle 21. The own vehicle 21 is moving on a trajectory 23, whereas the object 22 is moving on a trajectory 24. At a later second moment the object 22 is still inside the hidden area 25. If this does happen, for all or many moments where this check is made and additionally the vehicles trajectories and speeds are on a colliding course, then there is a dangerous situation.

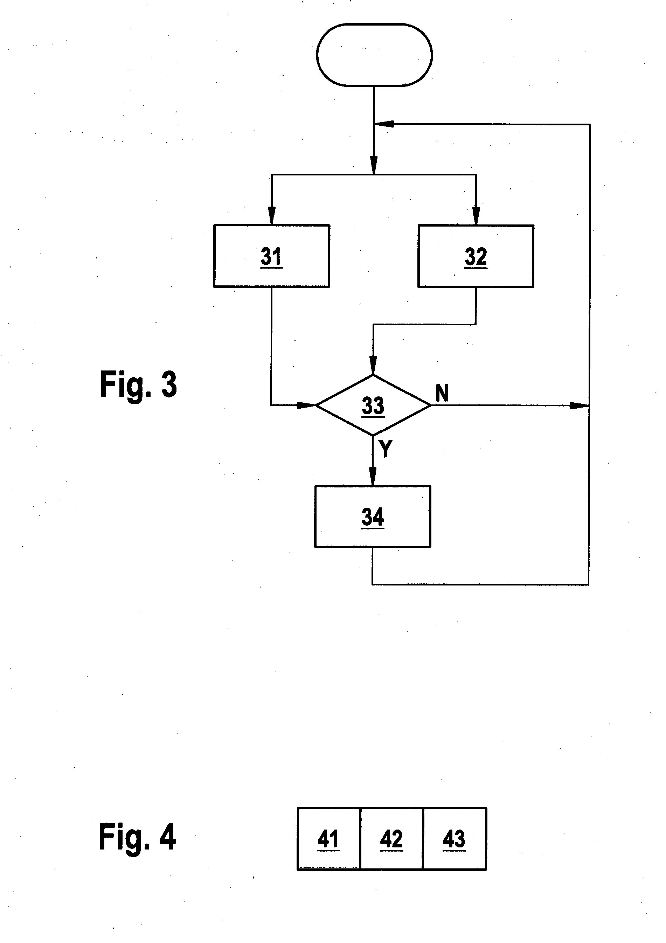

Figure 3 depicts a flow chart whereas a detection takes place if there are objects in the vicinity and these may collide 31. At the same time a measurement of the driver's head or eyes position takes place, including a determination of the hidden areas 32. After gaining this information, it is checked whether objects are inside the hidden area or remained inside the hidden area for a longer time, so it can be assumed that the driver didn't see it 33. If this is true, the driver has to be informed 34 for example by a warning of the display of the hidden area. Afterwards or otherwise in the case of no danger, the method starts from the beginning, eventually saving information of the objects for tracking purposes.

Figure 4 contains an overview of the input processing and output systems according to the following list:
Input systems 41:
   - Information via C2C communication
   - Vehicle geometry/boundaries
   - Head/Eye tracking system
   - Navigation system/Map data
   - Object detection system for interior of car
   - Object detection for outside of car (Laser scanner, FIR camera, (stereo) camera)
Processing systems 42:
   - Image analysis / Object detection (including distance, bearing, size, etc.)
   - Calculation of line of vision
   - Calculation of hidden areas
   - Merging objects in coordinate system
   - Calculate trajectories, speeds and collision courses
   - Save objects / data in memory
   - Plausible object data from several sources (i.e. trajectory by video and road map)
   - Determination of the actual danger level
Output systems 43:
   - Acoustic warning, left, right
   - Acoustic/optical warning in pillar
   - 3D-sound effect warning
   - Visual info or warning, left, right
   - Visual display of hidden area and/or colliding object
   - Information of other systems (passive: airbag, seatbelt tensioner; active: steering, braking)
   - Information of other vehicles

## Claims

1. Method for detecting possibly colliding objects (22) in at least one hidden area (12) for an operator of a vehicle, whereby
- the possibly colliding objects (22) in the vicinity and a first position of the operators head or eyes (11) are detected **and**
- at least one hidden area (12) by a relative position between the operators head (11) and visual obstacles (A, B, C, D) is **determined,** and
- determined, if the objects lay inside this area (12), **and**
- **measuring at least a second position (22 (1),(2)) of the objects (22) and**
- **calculating velocity and trajectories (23, 24) at successive time intervals (1),(2)).**

2. Method according to claim 1, **characterized by**
additional usage of information of a navigation system.

3. Method according to claim 1 to 2, **characterized by**
taking into account the line of vision.

4. Method according to claim 1 to 3, **characterized by**
taking into account the vigilance and/or attention and/or awareness of the driver.

5. Method according to claim 1 to 4, **characterized by**
warning the operator, dependent on the possibility to spot the objects from his point of view.

6. Method according to claim 1 to 4, **characterized by**
only displaying the hidden area, if a potentially colliding object exists.

7. Method according to claim 1 to 6, **characterized by**
passing the information over to other safety systems and/or other vehicles.

8. Method according to claim 1 to 7, **characterized by**
integrating the method within a device which also covers other functions.

9. Device for detecting possibly colliding objects (22) in an hidden area (12) for an operator of a vehicle,
comprising a vehicle surrounding sensor device and
a head/eye position recognition sensor system and
a computing unit receiving the information, **whereby**
**the computing unit is configured** to determine the hidden area by the information given by the sensors and
determine, if the objects lay inside this area **and**
**measuring at least a second position (22 (1), (2)) of the objects (22) by the camera and**
**means to calculate velocity and trajectories (23, 24) at successive time intervals ((1), (2)).**

10. Device according to claim 9, **characterized by**
determining a corresponding danger level.

11. Device according to claim 9 to 10, **characterized by**
additional usage of information from a navigation system.

12. Device according to claim 9 to 11, **characterized by**
the capability of the eye position recognition sensor system to determine the line of vision.

13. Device according to claim 9 to 12, **characterized by**
means to display warnings and/or information acoustically and/or visually.

14. Device according to claim 9 to 13, **characterized by**
integrating the method among other functions.

## Patentansprüche

1. Verfahren zum Detektieren möglicherweise kollidierender Objekte (22) in wenigstens einem für einen Bediener eines Fahrzeugs verborgenen Bereich (12), wobei
- die möglicherweise kollidierenden Objekte (22) in der Umgebung und eine erste Position des Kopfes (11) oder der Augen des Bedieners detektiert werden und
- wenigstens ein verborgener Bereich (12) durch eine relative Position zwischen dem Kopf (11) des Bedieners und sichtbaren Hindernissen (A, B, C, D) bestimmt wird und
- bestimmt wird, ob die Objekte innerhalb dieses Bereichs (12) liegen und
- wenigstens eine zweite Position (22 (1),(2)) der Objekte (22) gemessen wird und
- die Geschwindigkeit und die Bahnen (22, 24) in aufeinander folgenden Zeitintervallen ((1),(2)) berechnet werden.

2. Verfahren nach Anspruch 1, **gekennzeichnet durch**
zusätzliches Verwenden von Informationen eines Navigationssystems.

3. Verfahren nach Anspruch 1 oder 2, **gekennzeichnet durch**
Berücksichtigen der Sichtlinie.

4. Verfahren nach Anspruch 1 bis 3, **gekennzeichnet durch**
Berücksichtigen der Wachsamkeit und/oder Aufmerksamkeit und/oder Bewusstheit des Fahrers.

5. Verfahren nach Anspruch 1 bis 4, **gekennzeichnet durch**
Warnen des Bedieners in Abhängigkeit von der Möglichkeit, dass er die Objekte von seinem Standpunkt aus sieht.

6. Verfahren nach Anspruch 1 bis 4, **gekennzeichnet durch**
Anzeigen des verborgenen Bereichs nur dann, wenn ein möglicherweise kollidierendes Objekt vorhanden ist.

7. Verfahren nach Anspruch 1 bis 6, **gekennzeichnet durch**
Schicken der Informationen **durch** andere Sicherheitssysteme und/oder andere Fahrzeuge.

8. Verfahren nach Anspruch 1 bis 7, **gekennzeichnet durch**
Integrieren des Verfahrens in eine Vorrichtung, die auch andere Funktionen abdeckt.

9. Vorrichtung zum Detektieren möglicherweise kollidierender Objekte (22) in einem für einen Bediener eines Fahrzeugs verborgenen Bereich (12),
das eine Fahrzeugumgebungs-Sensorvorrichtung und
ein Kopfpositions-/Augenpositions-Erkennungssensorsystem und
eine Recheneinheit, die die Informationen empfängt, umfasst, wobei
die Recheneinheit konfiguriert ist, den verborgenen Bereich durch Informationen, die von den Sensoren gegeben werden, zu bestimmen und
zu bestimmen, ob die Objekte in diesem Bereich liegen und
wenigstens eine zweite Position (22(1), (2)) der Objekte (22) durch die Kamera zu messen; und
Mittel, um die Geschwindigkeit und die Bahnen (23, 24) in aufeinander folgenden Zeitintervallen ((1), (2)) zu berechnen.

10. Vorrichtung nach Anspruch 9, **gekennzeichnet durch**
Bestimmen eines entsprechenden Gefahrenniveaus.

11. Vorrichtung nach Anspruch 9 bis 10, **gekennzeichnet durch**
zusätzliches Verwenden von Informationen von einem Navigationssystem.

12. Vorrichtung nach Anspruch 9 bis 11, **gekennzeichnet durch**
die Fähigkeit des Augenpositions-Erkennungssensorsystems, um die Sichtlinie zu bestimmen.

13. Vorrichtung nach Anspruch 9 bis 12, **gekennzeichnet durch**
Mittel zum akustischen und/oder visuellen Anzeigen von Warnungen und/oder Informationen.

14. Vorrichtung nach Anspruch 9 bis 13, **gekennzeichnet durch**
Integrieren des Verfahrens in andere Funktionen.

## Revendications

1. Procédé pour détecter des objets (22) entrant éventuellement en collision dans au moins une zone d'angle mort (12) pour un opérateur d'un véhicule,
- les objets (22) entrant éventuellement en collision étant détectés à proximité, et dans une première position, de la tête ou des yeux (11) de l'opérateur et
- au moins une zone d'angle mort (12) étant déterminée par une position relative entre la tête de l'opérateur (11) et des obstacles visuels (A, B, C, D), et
- étant déterminée si les objets sont situés à l'intérieur de cette zone (12), et
- au moins une deuxième position (22 (1), (2)) des objets (22) étant mesurée et
- la vitesse et les trajectoires (23, 24) étant calculées à des intervalles de temps successifs ((1), (2)).

2. Procédé selon la revendication 1, **caractérisé par** l'utilisation additionnelle d'informations d'un système de navigation.

3. Procédé selon la revendication 1 ou 2, **caractérisé en ce que** l'on tient compte de la ligne de vue.

4. Procédé selon l'une quelconque des revendications 1 à 3, **caractérisé en ce que** l'on tient compte de la vigilance et/ou de l'attention et/ou de la concentration du conducteur.

5. Procédé selon l'une quelconque des revendications 1 à 4, **caractérisé en ce que** l'on avertit l'opérateur en fonction de la possibilité de détecter les objets à partir de son point de vue.

6. Procédé selon l'une quelconque des revendications 1 à 4, **caractérisé en ce que** la zone d'angle mort n'est affichée que s'il existe une possibilité de collision d'objets.

7. Procédé selon l'une quelconque des revendications 1 à 6, **caractérisé en ce que** les informations sont transmises à d'autres systèmes de sécurité et/ou à d'autres véhicules.

8. Procédé selon l'une quelconque des revendications 1 à 7, **caractérisé en ce que** le procédé est intégré à l'intérieur d'un dispositif qui assure également d'autres fonctions.

9. Dispositif pour détecter des objets (22) entrant éventuellement en collision dans une zone d'angle mort (12) pour un opérateur d'un véhicule, comprenant un dispositif de capteur entourant le véhicule et un système de capteur de reconnaissance de position de la tête/des yeux et une unité de calcul recevant les informations, l'unité de calcul étant configurée pour déterminer la zone d'angle mort au moyen des informations fournies par les capteurs et pour déterminer si les objets sont situés à l'intérieur de cette zone et mesurant au moins une deuxième position (22 (1), (2)) des objets (22) par la caméra et des moyens pour calculer la vitesse et les trajectoires (23, 24) à des intervalles de temps successifs ((1), (2)).

10. Dispositif selon la revendication 9, **caractérisé en ce qu'**un niveau de danger correspondant est déterminé.

11. Dispositif selon la revendication 9 ou 10, **caractérisé par** l'utilisation additionnelle d'informations provenant d'un système de navigation.

12. Dispositif selon l'une quelconque des revendications 9 à 11, **caractérisé en ce que** le système de capteur de reconnaissance de la position des yeux est capable de déterminer la ligne de vue.

13. Dispositif selon l'une quelconque des revendications 9 à 12, **caractérisé par** des moyens permettant d'afficher des avertissements et/ou des informations sous forme acoustique et/ou visuelle.

14. Dispositif selon l'une quelconque des revendications 9 à 13, **caractérisé par** l'intégration du procédé parmi d'autres fonctions.
